# EUROPÄISCHE PATENTSCHRIFT

(11) **EP 1 430 485 B1**
(45) Veröffentlichungstag und Bekanntmachung des Hinweises auf die Patenterteilung: **14.01.2009**
(21) Anmeldenummer: 02776745.8
(22) Anmeldetag: 24.09.2002
(51) Int. Cl.: G12B 21/08, G12B 21/22

(54) **Vorrichtung und Verfahren für ein Rastersondenmikroskop**
Device and method for scanning probe microscope
Dispositif et procédé pour microscope-sonde à balayage

(30) Priorität: 24.09.2001 DE 10147868
(43) Veröffentlichungstag der Anmeldung: 23.06.2004
(73) Patentinhaber: JPK Instruments AG, 12435 Berlin (DE)
(72) Erfinder: KNEBEL, DR. DETLEF, 12305 BERLIN (DE); JÄHNKE, Torsten, 12439 Berlin (DE); SÜNWOLDT, Olaf, 14167 Berlin (DE)
(74) Vertreter: Bittner, Thomas L.
(86) Internationale Anmeldenummer: PCT/DE2002/003688
(87) Internationale Veröffentlichungsnummer: WO 2003/028037

(56) Entgegenhaltungen:
- EP-A- 0 564 088
- US-A- 5 260 824
- US-A- 5 616 916
- US-A- 6 032 518
- WERF VAN DER K O ET AL: "COMPACT STAND-ALONE ATOMIC FORCE MICROSCOPE" REVIEW OF SCIENTIFIC INSTRUMENTS, AMERICAN INSTITUTE OF PHYSICS. NEW YORK, US, Bd. 64, Nr. 10, 1. Oktober 1993 (1993-10-01), Seiten 2892-2897, XP000400486 ISSN: 0034-6748

## Beschreibung

Die Erfindung liegt auf dem Gebiet von Vorrichtungen und Verfahren für die Rastersondenmikroskopie (SPM - "Scanning Probe Microscope").

Eine Form der Rastersondenmikroskopie ist die Rasterkraftmikroskopie (SFM - "Scanning Force Microscope", AFM - Atomic Force Microscopy). Ein wichtiges Anwendungsgebiet der Rastersondenmikroskopie ist die Bestimmung einer Topographie einer Oberfläche einer untersuchten Probe mit hoher lateraler und vertikaler Auflösung. Der Begriff "laterale Auflösung" bezeichnet hierbei die Auflösung in einer Ebene der zu untersuchenden Oberfläche. Die zu dieser Ebene senkrechte Richtung wird als vertikale Richtung bezeichnet. In Richtung der vertikalen Richtung wird die Topographie der Oberfläche mit einer vertikalen Auflösung bestimmt. Neben der Topologie können auch andere Eigenschaften einer zu untersuchenden Probe gemessen werden, beispielsweise die Elastizität oder Adhäsionskräfte. Zur Klasse der Rastersondenmikroskope gehören weiterhin optische Nahfeldmikroskope (SNOM - "Scanning Near Field Microscope").

Um Rastersondenmikroskopie betreiben zu können, muß der Abstand zwischen einer Meßsonde und der zu untersuchenden Probe sehr genau einstellbar und meßbar sein. Als Meßsonde werden in Verbindung mit Rastersondenmikroskopen beispielsweise Meßbalken verwendet, die als Cantilever bezeichnet werden. Speziell in Rasterkraftmikroskopen wird als Meßparameter eine Kraft zwischen dem Cantilever und der zu untersuchenden Probe ausgewertet, wobei die Kraft im einfachsten Fall mit einem Lenard-Jones Potential beschrieben werden kann. Mehrere Möglichkeiten können genutzt werden, um die Kraft zu detektieren. Im einfachsten Fall wird eine Auslenkung der Meßsonde, welche im Fall des Cantilevers bei der Rasterkraftmikroskopie in der Regel als ein dünner Federbalken ausgebildet ist, detektiert. Es existieren jedoch auch Meßverfahren, bei denen der Cantilever zum Schwingen angeregt wird. Die Dämpfung der Amplitude der angeregten Schwingung wird dann geregelt. Den bekannten Meßverfahren ist gemeinsam, daß eine Wechselwirkung zwischen dem Cantilever und der zu untersuchenden Probe gemessen wird. Der Begriff "Rastersondenmikroskopie" in der hier genutzten Bedeutung umfaßt all diese Meßverfahren bzw. die jeweils genutzten Mikroskope.

Bei einem bekannten Meßverfahren wird die Kraft, welche auf den Cantilever wirkt, mit Hilfe eines Lichtzeigerprinzips detektiert. Hierbei wird ein Meßlichtstrahl, insbesondere ein Laserstrahl auf den Cantilever gerichtet, wobei eine Fokusierung vorgesehen sein kann. In Abhängigkeit von einer Verbiegung des Cantilevers wird der Meßlichtstrahl an dem Cantilever oder einem mit dem Cantilever verbundenen Bauteil in einem bestimmten Winkel zur Einfallslichtrichtung reflektiert. Der reflektierte Lichtstrahl wird dann auf eine Photodiode gelenkt, die eine Empfängerfläche mit mindestens zwei Segmente aufweist. Ein Unterschied des empfangenen Lichtsignals für beide Segmente zeigt an, daß der Meßlichtstrahl von einer Mittelposition zwischen den beiden Segmenten entfernt ist. Die Mittelposition ist so definiert, daß der reflektierte Meßlichtstrahl zu gleichen Teilen auf beide Segmente fällt. Ein Verbiegung des Cantilevers führt dazu, daß die Gleichverteilung des reflektierten Meßlichtstrahls über beide Segmente geändert wird. Soll zusätzlich eine Torsion des Cantilevers detektiert werden, so kann eine Photodiode mit vier Segmenten genutzt werden, mit der eine Positionsbestimmung des reflektierten Meßlichtstrahls auf der Photodiode in zwei Richtungen möglich ist. Aus der Messung einer Verbiegung des Cantilevers kann bei Kenntnis einer Federkonstante des Cantilevers die Kraft zwischen dem Cantilever und der zu messenden Probe bestimmt werden.

Der Cantilever kann bei einem Rastersondenmikroskop zum Beispiel aus Silizium sein. Es können jedoch auch Materialien wie SiN₃ oder Diamant verwendet werden. Grundsätzlich ist das Meßverfahren nach dem Lichtzeigerprinzip unabhängig von dem Material, aus dem der Cantilever bzw. die Meßspitze gebildet ist.

Beim Abtasten der zu messenden Probe mit Hilfe des Cantilevers muß üblicherweise der Abstand zwischen Probe und Cantilever in vertikaler Richtung mit Hilfe einer Relativbewegung von Probe und Cantilever zueinander exakt eingestellt werden. Hierdurch kann beispielsweise ein konstantes Kraftverhältnis eingestellt werden. Zum Einstellen des Abstands können beispielsweise piezoelektrische Bauteile verwendet werden. Gleichzeitig wird bei der Messung eine rasterartige Bewegung des Cantilevers in lateraler Richtung relativ zur Probe ausgeführt. Grundsätzlich kann entweder die Probe oder der Cantilever bewegt werden. Wenn der Cantilever bewegt wird, spricht man von einem "Stand-alone"-Rastersondenmikroskop. Es ist jedoch auch möglich, den Cantilever lateral und die zu messende Probe vertikal oder umgekehrt zu bewegen.

In Verbindung mit "Stand-alone"-Rastersondenmikroskopen sind gegenwärtig zwei Ansätze zur Implementierung des Lichtzeigerprinzips bekannt. Bei einer Art der Implementierung werden alle Komponenten des Lichtzeigers in allen drei Raumrichtungen mitbewegt. Der Lichtzeiger ist dann unabhängig von der Bewegung des Cantilevers und zeigt lediglich eine Verbiegung desselben an. Nachteil dieser Implementierung ist es, daß für eine Justierung der Lichtquelle, welche die Meßlichtstrahlen erzeugt, verschiedene Verstelleinrichtungen vorgesehen werden müssen. Die gesamte Masse des hieraus resultierenden mechanischen Aufbaus muß mitbewegt werden, und eine mechanische Resonanzfrequenz des Meßsystems wird insbesondere auch in der vertikalen Richtung stark erniedrigt. Der mechanische Aufbau bei dieser Implementierung muß insgesamt auf engem Raum realisiert werden.

Bei einer zweiten Art der Implementierung wird lediglich der Cantilever in allen drei Raumrichtungen bewegt. In diesem Fall müssen jedoch Maßnahmen getroffen werden, die sicherstellen, daß die Meßlichtstrahlen auch bei der Bewegung des Cantilevers diesen nach wie vor treffen, um dann reflektiert zu werden. Insbesondere bei Messungen, die ein Abtasten von großen Bereichen mit dem Cantilever erfordern, ist ohne eine laterale Nachführung der Meßlichtstrahlen eine Abbildung des reflektierten Meßlichts auf die Photodiode unmöglich. Es wurden verschiedene Möglichkeiten für die Nachführung des Meßlichts vorgeschlagen. Mit Hilfe dieser Methoden gelingt es, daß sich die Intensität der reflektierten Meßlichtstrahlen bei der Bewegung des Cantilevers nicht oder nur geringfügig verändert. Sofern sich der Cantilever nicht verbiegt, ist das erhaltende Photodiodensignal aufgrund der reflektierten Meßlichtstrahlen vollständig oder nahezu konstant. Ein Nachteil dieser Vorgehensweise besteht jedoch darin, daß beim lateralen Nachführen der Meßlichtstrahlen nicht gleichzeitig eine Korrektur eines ebenfalls vorhandenen vertikalen Meßfehlers durchgeführt werden kann. Ein vertikaler Meßfehler entsteht dann, wenn der Cantilever nicht senkrecht zur Einfallsrichtung der Meßlichtstrahlen ausgerichtet ist, sondern leicht geneigt ist.

Bei dem Ausführen von Messungen mit Rastersondenmikroskopen besteht häufig der Wunsch, die zu untersuchende Probe zur weiteren Analyse ergänzend mit Hilfe eines Lichtmikroskops im Durchlicht zu untersuchen. In diesem Fall muß die Probe zum Erhalt optimierter Ergebnisse mit Kondensorlicht bestrahlt werden. Die beschriebenen Implementierungen des Lichtzeigerprinzips bei "Stand-alone"- Rastersondenmikroskopen erlaubt jedoch keine Untersuchung der Probe mit einem Lichtmikroskop, das über eine Kondensorbeleuchtung verfügt, wenn die Probe zum Messen mit dem Rastersondenmikroskop auf dessen Probenträger angeordnet ist.

Das Dokument US 5,616916 A beschreibt ein Rastersondenmikroskop mit einer Meßsonde, welche über einem Probenhalter angeordnet ist und von einem Laserstrahl aus einer Laserlichtquelle angestrahlt wird. Das Laserlicht wird mittels einer Linse auf eine Oberfläche der Meßsonde fokussiert. In einer Ausführungsform ist eine CCD-Kamera vorgesehen, welche Licht aufnimmt, das von einer auf dem Probenhalter angeordneten Probe reflektiert wird. Mittels zugehörigen Antriebseinheiten kann die Meßsonde ferner in drei zueinander senkrechten Raumrichtungen bewegt werden.

Die Veröffentlichung Werf et al., Review of Scientific Instruments, Bd. 64, Nr. 10, offenbart eine Kombination aus einem Rastersondenmikroskop und einem invertierten optischen Mikroskop. Hierbei sind die Meßsonde über einem Probenhalter und das Mikroskop unter dem Probehalter angeordnet.

In dem Dokument US 6,032,518 A wird ein Rastersondenmikroskop beschrieben. Das Dokument beschäftigt sich mit der Optimierung des Laserlichtpfades, welcher zum Verfolgen der Ablenkung der Meßsonde benutzt wird, sowie mit der Fokussierung des Laserlichts mittels optischer Komponenten.

Das Dokument EP 0 564 088 beschreibt ebenfalls ein Rastersondenmikroskop. Bei dem Rastersondenmikroskop sind ein Objektiv oder ein Okular zum Beobachten der Meßsonde und ihrer Umgebung vorgesehen, wobei für die Beobachtung sowohl das Auge des Benutzers als auch ein CCD-Gerät verwendet werden kann. Der Beobachtungspfad ist gegenüber der Meßanordnung seitlich versetzt.

Das Dokument US 5,260,824 offenbart ein Rastersondenmikroskop, wobei Licht auf die Spitze des Rastersondenmikroskops gestrahlt wird, um mittels des von der Spitze reflektierten Lichts eine Bewegung der Spitze zu messen.

Aufgabe der Erfindung ist es deshalb, eine verbesserte Vorrichtung und ein verbessertes Verfahren für ein Rastersondenmikroskop zu schaffen, welche(s) die gleichzeitige Untersuchung einer Meßprobe mit Hilfe der Rastersondenmikroskopie und der Lichtmikroskopie auf Basis einer Kondensorbeleuchtung ermöglicht.

Diese Aufgabe wird erfindungsgemäß durch eine Vorrichtung nach dem unabhängigen Anspruch 1 und ein Verfahren nach dem unabhängigen Anspruch 17 gelöst.

Die Erfindung umfaßt als wesentlichen Gedanken insbesondere die Ausbildung eines Kondensorlichtwegs durch eine Meßanordnung für ein Rastersondenmikroskop hindurch. Die Meßanordnung umfaßt eine laterale Verlagerungseinrichtung zum Verlagern einer Meßsonde, die beispielsweise als ein Cantilever ausgebildet ist, in einer Ebene, eine vertikale Verlagerungseinrichtung zum Verlagern der Meßsonde in einer Richtung senkrecht zu der Ebene und einen Probenträger zum Aufnehmen einer zu untersuchenden Meßprobe. Der Probenträger ist im Bereich eines Endes des durch die Meßanordnung hindurch gebildeten Kondensorlichtwegs angeordnet. Mit Hilfe der angegebenen Vorrichtung ist es möglich, daß eine zu untersuchende Meßprobe, die auf einem Probenträger angeordnet ist, sowohl mit Hilfe der Rastersondenmikroskopie als auch der Lichtmikroskopie auf Basis einer Kondensorbeleuchtung untersucht werden kann, ohne daß die Meßprobe zwischen den unterschiedlichen Untersuchungen von dem Probenträger gelöst werden muß. Es ist insbesondere auch eine zeitgleiche Ausführung von beiden Messungen möglich. Der durch die Meßanordnung hindurch ausgebildete Kondensorlichtweg erlaubt es, die Meßprobe auf dem Probenträger für die Untersuchung mit dem Lichtmikroskop mit einem Kondensorlicht zu beleuchten. Die Ausbildung des Kondensorlichtwegs durch die Meßanordnung hindurch ermöglicht es einerseits, daß die Bauteile für die rastersondenmikroskopische Untersuchung in kompakter Art und für eine stabile Bauform angeordnet werden können, so daß die rastersondenmikroskopischen Untersuchungen mit hoher Präzision ausgeführt werden können. Andererseits kann sich das Kondensorlicht in der für Lichtmikroskope üblichen Art und Weise zu der Meßprobe ausbreiten, ohne daß eine Umlenkung mit optischen Umlenkungsmitteln stattfindet. Auf diese Weise ist es möglich, eine sehr exakte Untersuchung mittels Rastersondenmikroskopie und eine lichtmikroskopische Messung mit Hilfe eines Lichtmikroskops mit Kondensorbeleuchtung zu kombinieren.

Ein weiterer Vorteil der Erfindung besteht darin, daß mit dem Kondensorlichtweg auch eine Möglichkeit geschaffen ist, die Meßprobe ohne das Einstrahlen von Kondensorlicht mikroskopisch zu untersuchen, indem zur Untersuchung der Meßprobe Licht mikroskopisch empfangen wird, was sich von der Meßprobe entlang des Kondensorlichtwegs zu einem Mikroskop ausbreitet. Bei dieser Art der lichtmikroskopischen Untersuchung kann ein Auflichtmikroskop genutzt werden. Der Kondensorlichtweg wird hierbei als eine Art Beobachtungskanal verwendet, welcher auch während der rastersondenmikroskopischen Untersuchung der Meßprobe zur Verfügung steht.

Eine zweckmäßige Ausgestaltung der Erfindung sieht vor, daß der Kondensorlichtweg im wesentlichen mittig durch die Meßanordnung hindurch gebildet ist, wodurch gewährleistet ist, daß die Elemente der Meßanordnung möglichst in der Nähe des Kondensorlichtwegs plaziert werden können, was einen stabilen und möglichst schwingungsfreien Aufbau der Meßanordnung unterstützt.

Eine vorteilhaft Ausführungsform der Erfindung kann vorsehen, daß der Kondensorlichtweg durch die laterale Verlagerungseinrichtung hindurch gebildet ist. Eine Beeinflussung des Kondensorlichts durch die laterale Verlagerungseinrichtung wird bei einer bevorzugten Ausgestaltung der Erfindung im wesentlichen dadurch vollständig verhindert, daß der Kondensorlichtweg durch eine Öffnung in der lateralen Verlagerungseinrichtung hindurch gebildet ist. Die Stabilität der Meßanordnung wird bei einer vorteilhaften Ausführungsform der Erfindung dadurch verbessert, daß die vertikale Verlagerungseinrichtung benachbart zu dem Kondensorlichtweg angeordnet ist.

Ein hinsichtlich der mechanischen Eigenschaften optimierter Aufbau der Meßanordnung wird bei einer zweckmäßigen Fortbildung der Erfindung dadurch erreicht, daß die vertikale Verlagerungseinrichtung mehrere vertikale Verlagerungselemente umfaßt, die um den Kondensorlichtweg herum angeordnet sind.

Eine exakte Ausführung der lichtmikroskopischen Untersuchung der Meßprobe ist bei einer zweckmäßigen Fortbildung der Erfindung dadurch erleichtert, daß der Kondensorlichtweg im wesentlichen parallel zu einer vertikalen Achse verläuft. Bei einer Fortbildung kann vorgesehen sein, daß der Kondensorlichtweg im wesentlichen parallel zu den Meßlichtstrahlen verläuft, die im Rahmen der rastersondenmikroskopischen Untersuchung auf den Cantilever gegeben werden.

Eine möglichst ungestörte Ausbreitung der Kondensorbeleuchtung in der bei Lichtmikroskopen üblichen Art wird bei einer zweckmäßigen Ausgestaltung der Erfindung dadurch gewährleistet, daß der Kondensorlichtweg gebildet ist, so daß sich ein Kondensorlicht in Form eines im wesentlichen kegelförmigen Kondensorlichtkegels zu dem Probenträger ausbreiten kann. Zu diesem Zweck werden die Bauteile des Rastersondenmikroskops so gestaltet, daß die kegelförmige Ausbreitung des Kondensorlichts unterstützt wird.

Eine möglichst kompakte Bauweise der Vorrichtung wird bei einer vorteilhaften Ausführungsform der Erfindung dadurch unterstützt, daß der Kondensorlichtweg durch ein Haltebauteil hindurch gebildet ist, wobei an dem Haltebauteil die vertikale Verlagerungseinrichtung angeordnet ist und das Haltebauteil zumindest teilweise aus einem lichtdurchlässigen Material ist. Die Bildung des Haltebauteils aus einem lichtdurchlässigen Material minimiert den Einfluß des Haltebauteils auf die Ausbreitung des Kondensorlichts.

Eine vorteilhafte Weiterbildung der Erfindung kann vorsehen, daß das Haltebauteil von einem Rahmenbauteil gehalten wird, wobei der Kondensorlichtweg durch eine Öffnung in dem Rahmenbauteil gebildet ist. Das Rahmenbauteil kann zur Montage verschiedener Bauteile der rastersondenmikroskopischen Vorrichtung genutzt werden, ohne eine übliche Ausbreitung der Kondensorbeleuchtung zu behindern.

Um einen gleichgerichteten Einfall der Kondensorbeleuchtung für eine lichtmikroskopische Untersuchung und des Meßlichts für die rastersondenmikroskopische Untersuchung zu ermöglichen sieht eine zweckmäßige Ausgestaltung der Erfindung vor, daß zumindest ein Teilabschnitt eines optischen Umlenkmittels zum Umlenken von Meßlichtstrahlen auf dem Meßbalken im Bereich des Kondensorlichtwegs angeordnet ist.

Zur Minimierung des Einflusses des optischen Umlenkmittels auf die Ausbreitung des Kondensorlichts kann bei einer vorteilhaften Weiterbildung der Erfindung vorgesehen sein, daß wenigstens der Teilabschnitt des optischen Umlenkmittels aus einem lichtdurchlässigen Material ist.

Der Lichteinfall von Kondensorlicht und Meßlicht kann zweckmäßig dadurch optimiert werden, daß das optische Umlenkmittel im wesentlichen mittig zu dem Kondensorlichtweg angeordnet ist.

Ein bevorzugte Ausführungsform der Erfindung sieht vor, daß die Meßsonde an einem weiteren Haltebauteil befestigt ist, wobei zumindest ein Teilabschnitt des weiteren Haltebauteils in dem Kondensorlicht angeordnet ist und der zumindest eine Teilabschnitt des weiteren Haltebauteils aus einem lichtdurchlässigen Material ist. Hierdurch wird eine möglichst stabile zentrale Lagerung der Meßsonde für die rastersondenmikroskopische Untersuchung gewährleistet.

Eine Befestigung des weiteren Haltebauteils, derart, daß das weitere Haltebauteil die übliche Ausbreitung des Kondensorlichts nicht behindert, ist bei einer bevorzugten Weiterbildung der Erfindung dadurch erreicht, daß das weitere Haltebauteil an einem anderen, an die vertikale Verlagerungseinrichtung gekoppelten Haltebauteil befestigt ist, welches eine Öffnung aufweist, wobei der Kondensorlichtweg durch die Öffnung hindurch gebildet ist.

Die Erfindung wird im folgenden anhand von Ausführungsbeispielen näher erläutert. Hierbei zeigen:
- Figur 1: eine schematische Darstellung einer Meßanordnung für ein Rastersondenmikroskop mit einem Durchlichtmikroskop;
- Figur 2: eine schematische Darstellung der Meßanordnung nach Figur 1 mit einem Auflichtmikroskop; und
- Figur 3: eine schematische Darstellung einer weiteren Meßanordnung für ein Rastersondenmikroskop mit einer Korrekturlinseneinrichtung.

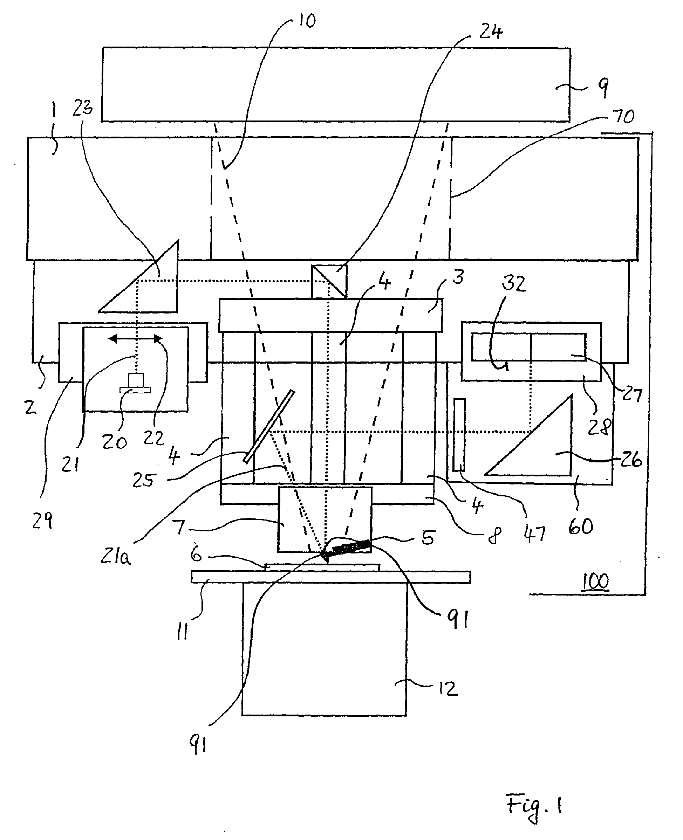

Figur 1 zeigt eine schematische Darstellung einer Meßanordnung 100 für ein Rastersondenmikroskop, insbesondere ein Rasterkraftmikroskop mit einer lateralen Verlagerungseinheit 1, welche eine exakte Bewegung der mit der lateralen Verlagerungseinheit 1 verbundenen weiteren Bauteile in einer Ebene ermöglicht, die senkrecht zur Zeichenebene in Figur 1 verläuft. Die laterale Verlagergungseinheit 1 kann beispielsweise mit Hilfe von piezoelektrischen Bauelementen gebildet sein. Grundsätzlich können jedoch beliebige Arten von Vorrichtungen genutzt werden, die eine exakte Verlagerung in einer Ebene ermöglichen. An der lateralen Verlagerungseinheit ist ein Rahmenbauteil 2 montiert. An dem Rahmenbauteil 2 sind weitere Bauteile der in Figur 1 dargestellten Anordnung für ein Rastersondenmikroskop derart befestigt, daß sie mit Hilfe der lateralen Verlagerungseinheit 1 in lateraler Richtung bewegt werden können.

An dem Rahmenbauteil 2 wird eine Glasplatte 3 gehalten. An der Glasplatte 3 sind mehrere vertikale Verlagerungseinheiten 4 angebracht, die vorzugsweise als piezoelektrische Bauteile ausgebildet sind. Die vertikalen Verlagerungseinheiten 4 sind so angeordnet, daß sie nicht oder zumindest nicht in störender Art und Weise in den Kondensorlichtweg 10 hinein reichen. Um eine hohe Stabilität zu gewährleisten, sind die vertikalen Verlagerungseinheiten 4 aber möglichst nahe an dem Kondensorlichtweg 10 angeordnet.

Mit Hilfe der vertikalen Verlagerungseinheit 4 kann eine zum Ausführen der rastersondenmikroskopischen Untersuchungen vorgesehene Meßsonde 5, bei der es sich im Fall des Rasterkraftmikroskops um einen sogenannten Cantilever handelt, in einer vertikalen Richtung, die senkrecht zu der lateralen Verlagerungsebene verläuft, exakt positioniert werden. Dieses ist notwendig, um den Abstand der Meßsonde 5 zu einer Probe 6 mit hoher Präzision einzustellen und zu messen. Die Meßsonde 5 ist an einen Glaskörper 7 montiert, welcher über ein Ringbauteil 8 an die mehreren lateralen Verlagerungseinheiten 4 gekoppelt ist. Damit die Meßanordnung 100 auch für eine Verwendung unter Flüssigkeiten geeignet ist, muß es einen definierten Übergang von der Luft zum Wasser geben. Dieser wird mit Hilfe des Glaskörpers 7 vermittelt, dessen Größe wiederum so gestaltet sein ist, daß die Kondensorlichtweg 10 nicht behindert ist. Der Glaskörper 7 weist vorteilhaft eine Nut auf, die einen zur Probenebene geneigten Einbau der Meßsonde 5 erlaubt.

Oberhalb der Meßanordnung 100 ist über der lateralen Verlagerungseinheit 1 ist eine Kondensorbeleuchtung 9 vorgesehen, welche Kondensorlicht erzeugt. In Figur 1 ist ein Kondensorlichtweg 10 kegelförmig ausgebildet, was mit Hilfe gestrichelter Linien dargestellt ist. Der Kondensorlichtweg 10 verläuft im wesentlichen mittig durch die laterale Verlagerungseinheit 1, die zu diesem Zweck eine Öffnung 70 aufweist, die Glasplatte 3, das Ringbauteil 8 sowie den Glaskörper 7 hindurch, um die auf einem Probenträger 11 angeordnete Probe 6 zu beleuchten. Bei dem Probenträger 11 kann es sich beispielsweise um einen kommerziell verfügbaren Objektträger oder eine Petrischale handeln. Die Kondensorbeleuchtung 9 dient zur Untersuchung der Probe 6 mit Hilfe eines Objektivs 12, das unterhalb des Probenträgers 11 angeordnet ist.

Die in Figur 1 dargestellt Ausführung der Meßanordnung 100 für ein Rastersondenmikroskop ermöglicht somit eine Beleuchtung der Probe 6 mit Kondensorlicht, auch wenn die Probe 6 auf dem Probenträger 11 für eine rastersondenmikroskopische Untersuchung angeordnet ist. Das Kondensorlicht kann sich in üblicher Weise, beispielsweise kegelförmig entlang des Kondensorlichtwegs 10 ausbreiten. Die im Bereich des Kondensorlichtwegs 10 angeordneten Bauteile der Anordnung nach Figur 1 weisen zur Vermeidung einer Behinderung der Lichtausbreitung des Kondensorlichts beispielsweise Öffnungen auf, durch die das Kondensorlicht gelangen kann, oder sind aus einem lichttransparenten Material gebildet, wie beispielsweise die Glasplatte 3 und der Glaskörper 7. Auf dem Weg von der Kondensorbeleuchtung 9 zu der Probe 6 ist keine Umlenkung des Kondensorlichts mit Hilfe zusätzlicher optischer Bauelemente notwendig. Solche optischen Umlenkungen führen in der Regel zu einer verminderten Qualität der Ausleuchtung der Probe 6 für die lichtmikroskopische Untersuchung mit Hilfe des Objektivs 12.

Mittels der in Figur 1 dargestellten Meßanordnung 100 kann die Probe 6 rastersondenmikroskopisch untersucht werden. Zu diesem Zweck erzeugt eine vorzugsweise als Laser ausgebildete Lichtquelle 20 Meßlichtstrahlen 21, die über eine Fokusierlinse 22, ein Prisma 23 sowie einen Strahlteiler 24 auf die Meßsonde 5 geleitet werden. Der Stahlteiler 24 ist in seiner Größe und in seinem Abstand zur Meßprobe 6 so gewählt, daß Phasenringe des Lichts von der Kondensorbeleuchtung 9, die den Phasenkontrast ermöglichen, entweder außen am Strahlteiler 24 vorbeigehen oder vollständig durch den Strahlteiler 24 hindurch verläuft. Damit das Licht des Kondensorbeleuchgtung 9 außerhalb des Strahlteilers 24 vollständig ungestört seitlich an diesem vorbeigehen kann, ist der Halter (d.h. die Glasplatte 3) des Strahlteilers 24 aus Glas oder einem anderen transparenten Material gefertigt. Eine andere Befestigung, beispielsweise mit einem Metallrahmen könnte vorgesehen sein, würde aber den Kondensorlichtweg 10 erheblich stören.

Gemäß dem Lichtzeigerprinzip werden die auf die Meßsonde 5 einfallenden Meßlichtstrahlen 21 reflektiert und als reflektierte Meßlichtstrahlen 21a über einen Umlenkspiegel 25 und ein weiteres Prisma 26 auf eine Photodiode 27 gelenkt. Die Photodiode 27 weist zweckmäßig eine Empfängerfläche 32 mit zwei Segmenten auf. In Abhängigkeit von der Verbiegung der Meßsonde 5 ändert sich die Verteilung der reflektierten Meßlichtstrahlen 21 a zwischen den beiden Segmenten der Empfängerfläche der Photodiode 27. Die im Bereich der beiden Segmente erzeugten Signale sind ein Maß für die Verbiegung der Meßsonde 5, wobei die Verbiegung der Meßsonde 5 wiederum Folge einer Wechselwirkung der Meßsonde 5 mit der Probe 6 ist. Es handelt sich hierbei um das übliche in Rastersondenmikroskopen, insbesondere Rasterkraftmikroskopen genutzte Lichtzeiger-Meßprinzip, welches deshalb nicht weiter ausgeführt wird.

Die Photodiode 27 ist mit Hilfe einer Verstelleinheit 28 an dem Rahmenbauteil 2 montiert. In ähnlicher Weise sind die Lichtquelle 20 und die Fokusierlinse 22 mit Hilfe einer weiteren Verstelleinheit 29 an dem Rahmenbauteil 2 befestigt.

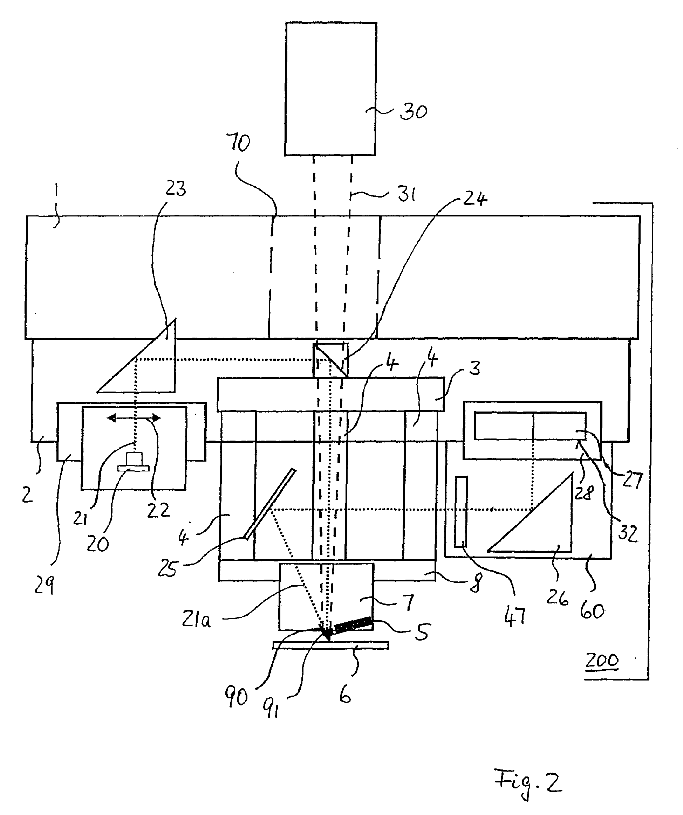

Figur 2 zeigt eine schematische Darstellung, bei der eine Meßanordnung 200 für ein Rastersondenmikroskop mit den gleichen Merkmalen wie in Figur 1 dargestellt ist. Im Unterschied zu der Ausführungsform nach Figur 1 ist für eine lichtmikroskopische Untersuchung der Probe 6 jedoch ein Auflichtmikroskop 30 vorgesehen. Mit Hilfe des Auflichtmikroskops 30 wird Licht gesammelt, das sich von der Meßprobe 6 kommend entlang eines Kondensorlichtwegs 31, welcher im Querschnitt im wesentlichen kegelschnittförmig ausgebildet ist, durch die Meßanordnung 200 für die rastersondenmikroskopische Untersuchung hindurch zu dem Auflichtmikroskop 30 ausbreitet. Wie bei der Ausführungsform nach Figur 1 verläuft der Kondensorlichtweg 31, welcher insbesondere hinsichtlich eines Durchmessers ausreichend groß gestaltet ist, so daß sich das Licht von einem Kondensor (in Figur 2 nicht dargestellt) durch ihn ausbreiten kann, und welcher beim Untersuchen der Meßprobe 6 mit dem Auflichtmikroskop 30 als eine Art Beobachtungskanal bzw. allgemeiner Lichtkanal genutzt wird, durch den sich Licht von der Meßprobe 6 zu dem Auflichtmikroskop 30 ausbreiten kann, im wesentlichen mittig zu der in Figur 2 gezeigten Meßanordnung 200. Die mit Hilfe der Lichtquelle 20 erzeugten Meßlichtstrahlen 21 verlaufen nach der Umlenkung mit Hilfe des Strahlteilers 24 innerhalb des Kondensorlichtwegs 31 und im wesentlichen parallel zum Kondensorlicht 31, wie dieses auch bei der Ausführungsform nach Figur 1 der Fall ist.

Aufgrund der Ausbildung des Kondensorlichtwegs 10 bzw. 31 ist die Gesamtbauhöhe der Meßanordnung 100 bzw. 200 beschränkt. Gegenwärtig liegen die größten Arbeitsabstände für kommerziell erhältliche Kondensoren im Bereich von etwa 70mm. Naturgemäß nehmen die oben beschriebenen Verlagerungseinheiten 1 bzw. 4 schon einen Teil der Bauhöhe ein. Hieraus ergibt sich die Forderung, daß die Elemente, die zum Messen mittels des Lichtzeigerprinzips verwendet werden, mit einer geringen Bauhöhe auskommen müssen, wenn man die Forderung nach einem kompakten Design der Meßanordnung 100 bzw. 200 einhalten will.

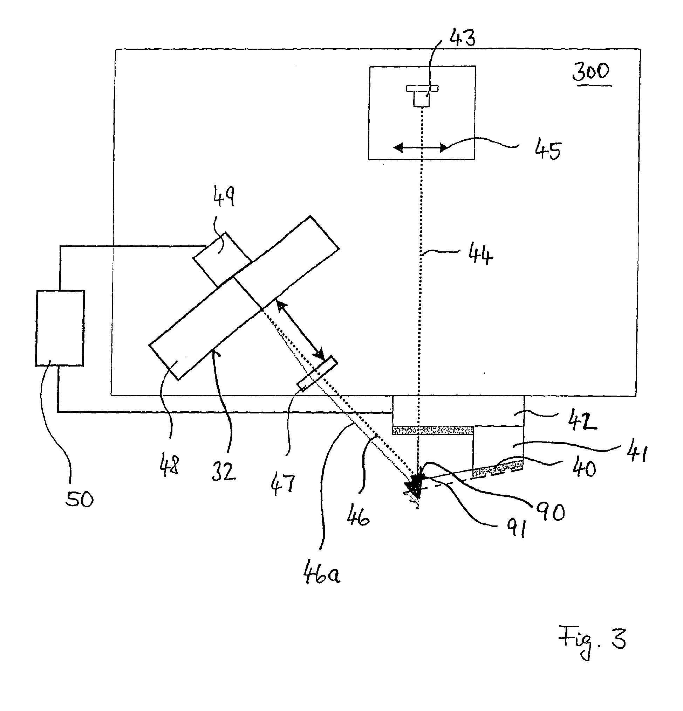

Zum Ausbilden des Kondensorlichtwegs 10 bzw. 31 sind einige Bauteile oberhalb der Meßprobe 6 und der Meßsonde 5 transparent gestaltet. Hieraus und aus dem "Stand-alone"-Prinzip ergeben sich starke Einschränkungen für den Verlauf der Meßlichtstrahlen 21 und der reflektierten Meßlichtstrahlen 21 a. Die Elemente des Lichtzeigers, nämlich insbesondere die Lichtquelle 20, die Fokusierlinse 25, die weitere Verstelleinheit 29, das Prisma 23, der Strahlteiler 24 sowie der Umlenkspiegel 25, das weitere Prisma 26, eine Korrekturlinse 47, die Verstelleinheit 28, die Photodiode 27 und die Meßsonde 5 bzw. ein an der Meßsonde 5 befestigte Reflexionselement 91 zum Reflektieren der einfallenden Meßlichtstrahlen 21, sind mit der lateralen Verstelleinheit 1 mechanisch verbunden und werden von der lateralen Verstelleinheit 1 zusammen bewegt, was dazu führt, daß sich diese Elemente beim Abtasten der Meßprobe 6 relativ zueinander in Ruhe befinden. Hierdurch entfällt die Notwendigkeit für eine Nachführung der Meßlichtstrahlen 21 auf der Meßsonde 5. Es können somit die im Stand der Technik vorgesehenen Korrektureinheiten eingespart werden, die darüber hinaus eine Lichtausbreitung entlang des Kondensorlichtwegs 10 bzw. 31 stören können. In vertikaler Richtung wird hingegen von den Elementen des Lichtzeigers nur die Meßsonde 5 bzw. das an der Meßsonde 5 befestigte Reflexionselement 91 zum Reflektieren der einfallenden Meßlichtstrahlen 21 mit Hilfe der vertikalen Verlagerungseinheit 4 verlagert. Diese Verlagerung der Meßsonde 5 führt zu einer Relativbewegung der Meßsonde 5 zu den übrigen Elementen des Lichtzeigers. Eine hierfür vorgesehene Korrektur wird unten unter Bezugnahme auf Figur 3 im Detail beschrieben.

Für den Verlauf der an der Meßsonde 5 reflektierten Meßlichtstrahlen ergeben sich prinzipiell zwei Möglichkeiten, um den Kondensorlichtweg 10 bzw. 31 nicht zu behindern. Eine Möglichkeit besteht darin, die Meßsonde 5 parallel zur Ebene der Meßprobe 6 auszurichten und die reflektieren Meßlichtstrahlen auf dem Einfallsweg wieder zurück zu leiten. Außerhalb des Bereichs des Kondensorlichtwegs 10 bzw. 31 kann dann eine Trennung der beiden Strahlengänge, d.h. der auf die Meßsonde 5 einfallenden Meßlichtstrahlen und der an der Meßsonde 5 reflektierten Meßlichtstrahlen, stattfinden und die reflektierten Meßlichtstrahlen auf die Photodiode gelenkt werden. Eine Trennung kann z.B. mittels einer Polarisationsunterscheidung stattfinden. Ein Nachteil dieser Vorgehensweise besteht darin, daß es eher schwierig ist, die Meßsonde 5 derart zu befestigen, daß ihre Spitze der tiefste Punkt der Meßanordnung 100 bzw. 200 ist. Dies ist insbesondere dann schwierig, wenn Meßproben mit sehr rauhen Oberflächen analysiert werden sollen. Es besteht zwar die Möglichkeit, die Meßsonde 5, beispielsweise einen Cantilever-Chip anzukleben; diese Lösung erfordert aber wieder eine aufwendige Loslösung von der Halterung, beispielsweise beim Austausch der Meßsonde 5. Es könnte auch vorgesehen sein, den Cantilever-Chip über einen dünnen flüssigen Film anzuheften; diese Vorgehensweise ist jedoch nicht sehr sicher.

Um den Kondensorlichtweg 10 bzw. 31 nicht zu beeinträchtigen, besteht alternativ die Möglichkeit, die Meßsonde 5 geneigt zur Meßprobe 6 einzubauen, so daß die reflektierten Meßlichtstrahlen 21a weit genug aus dem Kondensorlichtweg 10 bzw. 31 abgelenkt werden (vgl. Figuren 1 und 2), was dazu führt, daß keine weiteren Bauteile, z.B. die Photodiode 27, den Kondensorlichtweg 10 bzw. 31 stören. Hierbei kann eine zu starke Verkippung der Meßsonde 5 jedoch dazu führen, daß möglicherweise Probleme auftreten, da eine Meßwertverfälschung durch die Spitzengeometrie der Meßsonde 5 immer wahrscheinlicher wird. Es zeigt sich zudem, daß eine kleine lokale Störung des Strahlengangs in dem Kondensorlichtweg 10 bzw. 31 nicht zu einem relevanten Verlust in der Auflösung des optischen Bildes führt, so daß im derzeit bevorzugten Ausführungsbeispiel die Meßsonde 5 nur leicht verkippt wird und eine Auskopplung der reflektierten Meßlichtstrahlen 21 a mittels des Umlenkspiegels 25 erfolgt, der nur in geringem Maß in den Kondensorlichtweg 10 bzw. 31 eingreift.

Durch die neuartige Anordnung der Elemente des Lichtzeigers ergibt sich zusätzlich ein Vorteil gegenüber bekannten Verfahren zur Korrektur der Meßlichtstrahlen bei Messungen nach dem Lichtzeigerprinzip mit "Stand-alone"-Rastersondenmikroskopen. Es entfällt eine Korrektur in lateraler Richtung, da alle Baugruppen des Lichtzeigers lateral zusammen bewegt werden und deshalb relativ zueinander in Ruhe sind. Es muß aber noch eine Korrektur von Meßwertverfälschungen vorgesehen werden, die durch eine vertikale Bewegung der Meßsonde 5 relativ zu den übrigen Elementen des Lichtzeigers hervorgerufen werden. Die hierdurch entstehende Meßwertverfälschung beruht auf einem Parallelversatz der reflektieren Meßlichtstrahlen 21a in Abhängigkeit von der vertikalen Auslenkung der Meßsonde 5.

Figur 3 zeigt eine schematische Darstellung einer Lichtzeigervorrichtung 300 für ein "Stand-alone"-Rastersondenmikroskop, insbesondere ein Rasterkraftmikroskop. Gemäß Figur 3 ist eine Meßsonde 40 über eine Befestigungseinheit 41 mit einer vertikalen in z-Richtung verlaufenden Verstelleinheit 42 verbunden. Beim Ausführen einer Messung nach dem Lichtzeigerprinzip wird die Lichtzeigervorrichtung 300, welche bei der Ausführung nach Figur 3 die Lichtquelle 43, eine Fokussierlinse 45, die Korrekturlinse 47 sowie die Photodiode 48 mit ihrer Beschaltung 49 umfaßt, lateral als Gesamteinheit zusammen mit der Meßsonde 40 sowie der Befestigungseinheit 41 und der vertikalen Verstelleinrichtung 42 bewegt. Zu diesem Zweck sind die Lichtquelle 43, eine Fokussierlinse 45, die Korrekturlinse 47, die Photodiode 48 und deren Beschaltung 49 mit der lateralen Verstelleinheit (in Figur 3 nicht dargestellt) des Rastersondenmikroskops mechanisch verbunden, wie dieses bereits für die Ausführungsformen in den Figuren 1 und 2 beschrieben wurde, welche ebenfalls den im Folgenden erläuterten Korrekturmechanismus mittels der Korrekturlinse 47 aufweisen. Wesentlich ist, daß alle Baugruppen des Lichtzeigers, einschließlich der Meßsonde in lateraler Richtung gemeinsam verschoben werden können und in vertikaler Richtung die Meßsonde relativ zu den übrigen Baugruppen verlagerbar ist. Die hierbei potentiell entstehenden Meßfehler werden korrigiert, was im folgenden Abschnitt näher erläutert wird.

Ein mit Hilfe einer Lichtquelle 43 erzeugter Meßlichtstrahl 44, der nach dem Verlassen der Lichtquelle 43 zunächst eine Fokusierlinse 45 passiert, trifft auf die Meßsonde 40 und wird auf einer Reflexionsfläche 90 einer Reflexionseinrichtung 91, beispielsweise einem Spiegel, reflektiert, so daß ein reflektiertet Meßlichtstrahl 46 entsteht, der über eine Korrekturlinse 47 auf eine Photodiode 48 gelangt. Die Korrekturlinse 47 ist in den Figuren 1 bis 3 mit dem gleichen Bezugszeichen versehen. Die Photodiode 48 weist eine elektronische Beschaltung 49 auf, welche dazu dient, die mit Hilfe der Photodiode 48 empfangenen Meßsignale zu verarbeiten. Über die elektronische Beschaltung 49 ist die Photodiode 48 an eine Regeleinrichtung 50 gekoppelt, die ihrerseits eine Verbindung zu der vertikalen Verstelleinrichtung 42 aufweist. Mit Hilfe der Regeleinrichtung 50 wird eine Regelgröße in Abhängigkeit von den mit der Photodiode 48 empfangenen Meßsignalen erzeugt, um die vertikale Verstelleinrichtung 42 nachzuregeln. Auf diese Weise wird die Meßsonde 40 vertikal in z-Richtung verlagert, was in Figur 3 mittels gestrichelter Linien dargestellt ist.

Die vertikale Verlagerung der Meßsonde 40 mit Hilfe der Verstelleinrichtung 42 hat eine Relativbewegung der Meßsonde 40 zu weiteren Elementen des Lichtzeigers zur Folge. Nach der Verlagerung wird ein geänderter reflektierter Meßlichtstrahl 46a, der zum reflektierten Meßlichtstrahl 46 parallel verschoben ist, auf die Korrekturlinse 47 gegeben. Mit Hilfe der Korrekturlinse 47 wird der geänderte reflektierte Meßlichtstrahl 46a jedoch in den gleichen Bereich der Empfängerfläche der Photodiode 48 wie der reflektierte Meßlichtstrahl 46 gerichtet. Um dieses zu erreichen, ist die Korrekturlinse 47 in einem Abstand 51 von der Empfängerfläche der Photodiode 48 angeordnet, welcher im wesentlichen der Fokuslänge der Korrekturlinse 47 entspricht. Die Korrekturlinse 47 korrigiert somit die oben beschriebenen Meßwertverfälschungen aufgrund einer Bewegung der Meßsonde 40 in vertikaler Richtung bzw. z-Richtung und kann deshalb auch als z-Korrekturlinse bezeichnet werden.

Bei den Ausführungsformen nach den Figuren 1 und 2 wird eine Relativbewegung der Meßsonde 5 zu weiteren Elementen des Lichtzeigers durch eine Betätigung der vertikalen Verlagerungseinheit 4 verursacht, da von den Elementen des Lichtzeigers nur die Meßsonde 5 mit der vertikalen Verlagerungseinheit verlagerbar ist. Die Korrektur von hierdurch entstehenden Meßwertfehlern wird mittels der Korrekturlinse 47 erreicht, deren Abstand von de Empfängerfläche der Photodiode 21 der Brennweite der Korrekturlinse entspricht, so daß eventuell parallel versetzte reflektierte Meßlichtstrahlen 21 a des Meßergebnis nicht verfälschen. Demgegenüber sind insbesondere die Korrekturlinse 47 und das Prisma 26, mit denen die reflektierten die Meßlichtstrahlen 21 a auf die Photodiode 27 gelenkt werden, mit Hilfe einer Befestigungseinheit 60 an die laterale Verlagerungseinheit 1 gekoppelt, so daß sie gemeinsam mit der Photodiode 27 und den übrigen Elementen des Lichtzeiger bewegt werden.

## Patentansprüche

1. Vorrichtung für ein Rastersondenmikroskop, insbesondere ein Rasterkraftmikroskop, mit einer Meßanordnung (100; 200), welche eine laterale Verlagerungseinrichtung (1) zum Verlagern einer Meßsonde (5) in einer Ebene, eine vertikale Verlagerungseinrichtung (4) zum Verlagern der Meßsonde (5) in einer Richtung senkrecht zu der Ebene und einen Probenträger (11) zum Aufnehmen einer Meßprobe (6) umfaßt, **dadurch gekennzeichnet, daß** zwischen einer Kondensorbeleuchtung (9) und dem Probenträger (11) durch die Meßanordnung (100; 200) hindurch ein Kondensorlichtweg (10) gebildet ist.

2. Vorrichtung nach Anspruch 1, **dadurch gekennzeichnet, daß** der Kondensorlichtweg (10) im wesentlichen mittig durch die Meßanordnung (100; 200) hindurch gebildet ist.

3. Vorrichtung nach Anspruch 1 oder 2, **dadurch gekennzeichnet, daß** der Kondensorlichtweg (10) durch die laterale Verlagerungseinrichtung (1) hindurch gebildet ist.

4. Vorrichtung nach Anspruch 3, **dadurch gekennzeichnet, daß** der Kondensorlichtweg (10) durch eine Öffnung (70) in der lateralen Verlagerungseinrichtung (1) hindurch gebildet ist.

5. Vorrichtung nach einem der vorangehenden Ansprüche, **dadurch gekennzeichnet, daß** die vertikale Verlagerungseinrichtung (4) benachbart zu dem Kondensorlichtweg (10) angeordnet sind.

6. Vorrichtung nach Anspruch 5, **dadurch gekennzeichnet, daß** die vertikale Verlagerungseinrichtung (4) mehrere vertikale Verlagerungselemete umfaßt, die um den Kondensorlichtweg (10) herum angeordnet sind.

7. Vorrichtung nach einem der vorangehenden Ansprüche, **dadurch gekennzeichnet, daß** der Kondensorlichtweg (10) im wesentlichen parallel zu einer vertikalen Achse verläuft.

8. Vorrichtung nach einem der vorangehenden Ansprüche, **dadurch gekennzeichnet, daß** der Kondensorlichtweg (10) gebildet ist, so daß sich ein Kondensorlicht in Form eines im wesentlichen kegelförmigen Kondensorlichtkegels zu dem Probenträger (11) ausbreiten kann.

9. Vorrichtung nach einem der vorangehenden Ansprüche, **dadurch gekennzeichnet, daß** der Kondensorlichtweg (10) durch ein Haltebauteil (3) hindurch gebildet ist, wobei an dem Haltebauteil (3) die vertikale Verlagerungseinrichtung (4) angeordnet ist und das Haltebauteil (3) zumindest teilweise aus einem lichtdurchlässigen Material ist.

10. Vorrichtung nach Anspruch 9, **dadurch gekennzeichnet, daß** das Haltebauteil (3) im wesentlichen mittig zu dem Kondensorlichtweg (10) angeordnet ist.

11. Vorrichtung nach Anspruch 9 oder 10, **dadurch gekennzeichnet, daß** das Haltebauteil (3) von einem Rahmenbauteil (2) gehalten wird, wobei der Kondensorlichtweg (10) durch eine Öffnung (70) in dem Rahmenbauteil (2) gebildet ist.

12. Vorrichtung nach einem der vorangehenden Ansprüche, **dadurch gekennzeichnet, daß** zumindest ein Teilabschnitt eines optischen Umlenkmittels (24) zum Umlenken von Meßlichtstrahlen auf die Meßsonde (5) im Bereich des Kondensorlichtwegs (10) angeordnet ist.

13. Vorrichtung nach Anspruch 12, **dadurch gekennzeichnet, daß** wenigstens der Teilabschnitt des optischen Umlenkmittels (24) aus einem lichtdurchlässigen Material ist.

14. Vorrichtung nach Anspruch 12 oder 13, **dadurch gekennzeichnet, daß** das optische Umlenkmittel (24) im wesentlichen mittig zu dem Kondensorlichtweg (10) angeordnet ist.

15. Vorrichtung nach einem der vorangehenden Ansprüche, **dadurch gekennzeichnet, daß** die Meßsonde (5) an einem weiteren Haltebauteil (7) befestigt ist, wobei zumindest ein Teilabschnitt des weiteren Haltebauteils (7) in dem Kondensorlichtweg (10) angeordnet ist und der zumindest eine Teilabschnitt des weiteren Haltebauteils (7) aus einem lichtdurchlässigen Material ist.

16. Vorrichtung nach Anspruch 15, **dadurch gekennzeichnet, daß** das weitere Haltebauteil (7) an einem anderen, an die vertikale Verlagerungseinrichtung (4) gekoppelten Haltebauteil (8) befestigt ist, welches eine Öffnung aufweist, wobei der Kondensorlichtweg (10) durch die Öffnung hindurch gebildet ist.

17. Verfahren zum mikroskopischen Untersuchen einer Meßprobe (6) auf einem Probenträger (11) eines Rastersondenmikroskops, insbesondere eines Rasterkraftmikroskops, mit einem Lichtmikroskop, wobei das Rastersondenmikroskop eine Meßanordnung (100) mit einer lateralen Verlagerungseinrichtung (1) zum Verlagern einer Meßsonde (5) in einer Ebene und einer vertikalen Verlagerungseinrichtung (4) zum Verlagern der Meßsonde (5) in einer Richtung senkrecht zu der Ebene umfaßt, **dadurch gekennzeichnet, daß** zwischen einer Kondensorbeleuchtung (9) und dem Probenträger (11) entlang eines Kondensorlichtwegs (10) ein Kondensorlicht zum Beleuchten der Meßprobe (6) auf dem Probenträger (11) durch die Meßanordnung (100) hindurch geführt wird.

18. Verfahren nach Anspruch 17, **dadurch gekennzeichnet, daß** ein von der Meßprobe (6) ausgehendes Licht entlang des Kondensorlichtwegs (10) durch die Meßanordnung (200) hindurch geführt wird.

19. Verwendung einer Vorrichtung nach einem der Ansprüche 1 bis 16 oder eines Verfahrens nach Anspruch 17 oder 18 in einem "Stand-alone"- Rastersondenmikroskop.

## Claims

1. An apparatus for a scanning probe microscope, especially a scanning force microscope, comprising a measuring assembly (100; 200) which includes a lateral shifting means (1) to displace a probe (5) in a plane, a vertical shifting means (4) to displace the probe (5) in a direction perpendicular to the plane, and a specimen support (11) to receive a specimen (6), **characterized in that** a condenser light path (10) is formed through the measuring assembly (100; 200) between a condenser lighting (9) and the specimen support (11).

2. The apparatus as claimed in claim 1, **characterized in that** the condenser light path (10) is formed substantially centrally through the measuring assembly (100; 200).

3. The apparatus as claimed in claim 1 or 2, **characterized in that** the condenser light path (10) is formed through the lateral shifting means (1).

4. The apparatus as claimed in claim 3, **characterized in that** the condenser light path (10) is formed through an opening (70) in the lateral shifting means (1).

5. The apparatus as claimed in any one of the preceding claims, **characterized in that** the vertical shifting means (4) are arranged adjacent to the condenser light path (10).

6. The apparatus as claimed in claim 5, **characterized in that** the vertical shifting means (4) comprises a plurality of vertical shifting elements which are arranged around the condenser light path (10).

7. The apparatus as claimed in any one of the preceding claims, **characterized in that** the condenser light path (10) extends substantially parallel to a vertical axis.

8. The apparatus as claimed in any one of the preceding claims, **characterized in that** the condenser light path (10) is formed so that condenser light can spread in the shape of a substantially conical condenser light cone towards the specimen support (11).

9. The apparatus as claimed in any one of the preceding claims, **characterized in that** the condenser light path (10) is formed through a retaining member (3), the vertical shifting means (4) being disposed on the retaining member (3) and the retaining member (3) being made, at least in part, of transparent material.

10. The apparatus as claimed in claim 9, **characterized in that** the retaining member (3) is arranged substantially centrally with respect to the condenser light path (10).

11. The apparatus as claimed in claim 9 or 10, **characterized in that** the retaining member (3) is held by a frame member (2), the condenser light path (10) being formed through an opening (70) in the frame member (2).

12. The apparatus as claimed in any one of the preceding claims, **characterized in that** at least a section of an optical deflecting means (24) is disposed in the range of the condenser light path (10) to deflect measuring light rays towards the probe (5).

13. The apparatus as claimed in claim 12, **characterized in that** at least said section of the optical deflecting means (24) is made of transparent material.

14. The apparatus as claimed in claim 12 or 13, **characterized in that** the optical deflecting means (24) is arranged substantially centrally with respect to the condenser light path (10).

15. The apparatus as claimed in any one of the preceding claims, **characterized in that** the probe (5) is fixed to another retaining member (7), at least one section of the other retaining member (7) being disposed in the condenser light path (10) and said at least one section of the other retaining member (7) being made of transparent material.

16. The apparatus as claimed in claim 15, **characterized in that** the other retaining member (7) is fixed to another retaining member (8) which is coupled to the vertical shifting means (4) and comprises an opening, the condenser light path (10) being formed through the opening.

17. A method of microscopically examining a specimen (6) on a specimen support (11) of a scanning probe microscope, especially a scanning force microscope, by means of an optical microscope, the scanning probe microscope comprising a measuring assembly (100) which includes a lateral shifting means (1) to displace a probe (5) in a plane and a vertical shifting means (4) to displace the probe (5) in a direction perpendicular to the plane, **characterized in that** condenser light for illuminating the specimen (6) on the specimen support (11) is guided between a condenser lighting (9) and the specimen support (11) along a condenser light path (10) through the measuring assembly (100).

18. The method as claimed in claim 17**, characterized in that** light emanating from the specimen (6) is guided along the condenser light path (10) through the measuring assembly (200).

19. Use of an apparatus as claimed in any one of claims 1 to 16 or a method as claimed in claim 17 or 18 in a stand-alone scanning probe microscope.

## Revendications

1. Dispositif pour un microscope à sonde à balayage, en particulier un microscope à forces atomiques, avec un montage de mesure (100 ; 200) qui comprend un équipement de décalage latéral (1) pour le décalage d'une sonde de mesure (5) dans un plan, un équipement de décalage vertical (4) pour le décalage d'une sonde de mesure (5) dans un sens perpendiculaire au plan et un support d'échantillon (11) pour le logement d'un échantillon de mesure (6), **caractérisé en ce qu'**un trajet optique de condenseur (10) est formé entre un éclairage de condenseur (9) et le support d'échantillon (11) à travers le montage de mesure (100 ; 200).

2. Dispositif selon la revendication 1, **caractérisé en ce que** le trajet optique de condenseur (10) est essentiellement formé centralement à travers le montage de mesure (100 ; 200).

3. Dispositif selon la revendication 1 ou 2, **caractérisé en ce que** le trajet optique de condenseur (10) est formé à travers l'équipement de décalage latéral (1).

4. Dispositif selon la revendication 3, **caractérisé en ce que** le trajet optique de condenseur (10) est formé à travers une ouverture (70) dans l'équipement de décalage latéral (1).

5. Dispositif selon l'une quelconque des revendications précédentes, **caractérisé en ce que** l'équipement de décalage vertical (4) est disposé dans le voisinage du trajet optique de condenseur (10).

6. Dispositif selon la revendication 5, **caractérisé en ce que** l'équipement de décalage vertical (4) comprend plusieurs éléments de décalage verticaux qui sont disposés tout autour du trajet optique de condenseur (10).

7. Dispositif selon l'une quelconque des revendications précédentes, **caractérisée en ce que** le trajet optique de condenseur (10) est essentiellement parallèle à un axe vertical.

8. Dispositif selon l'une quelconque des revendications précédentes, **caractérisé en ce que** le trajet optique de condenseur (10) est formé de manière à ce qu'une lumière de condenseur sous forme d'un cône lumineux de condenseur essentiellement conique puisse se propager vers le support d'échantillon (11).

9. Dispositif selon l'une quelconque des revendications précédentes, **caractérisé en ce que** le trajet optique de condenseur (10) est formé à travers un composant de retenue (3), étant donné que l'équipement de décalage vertical (4) est disposé contre le composant de retenue (3) et que le composant de retenue (3) est au moins partiellement fabriqué en un matériau translucide.

10. Dispositif selon la revendication 9, **caractérisé en ce que** le composant de retenue (3) est disposé essentiellement centralement par rapport au trajet optique de condenseur (10).

11. Dispositif selon la revendication 9 ou 10, **caractérisé en ce que** le composant de retenue (3) est retenu par un composant-cadre (2), étant donné que le trajet optique de condenseur (10) est formé à travers une ouverture (70) dans le composant-cadre (2).

12. Dispositif selon l'une quelconque des revendications précédentes, **caractérisé en ce qu'**au moins une section partielle d'un moyen de déviation optique (24) est disposée au niveau du trajet optique de condenseur (10) afin de dévier des faisceaux lumineux de mesure sur la sonde de mesure (5).

13. Dispositif selon la revendication 12, **caractérisé en ce qu'**au moins la section partielle du moyen de déviation optique (24) est fabriquée en un matériau translucide.

14. Dispositif selon la revendication 12 ou 13, **caractérisé en ce que** le moyen de déviation optique (24) est disposé essentiellement centralement par rapport au trajet optique de condenseur (10).

15. Dispositif selon l'une quelconque des revendications précédentes, **caractérisé en ce que** la sonde de mesure (5) est fixée à un autre composant de retenue (7), étant donné qu'au moins une section partielle de l'autre composant de retenue (7) est disposée dans le trajet optique de condenseur (10) et que la ou les sections partielles de l'autre composant de retenue (7) sont au moins partiellement fabriquées en un matériau translucide.

16. Dispositif selon la revendication 15, **caractérisé en ce que** l'autre composant de retenue (7) est fixé à un autre composant de retenue (8) couplé à l'équipement de décalage vertical (4), le composant de retenue (8) présentant une ouverture, étant donné que le trajet optique de condenseur (10) est formé à travers l'ouverture.

17. Procédé pour l'examen microscopique d'un échantillon de mesure (6) sur un support d'échantillon (11) d'un microscope à sonde à balayage, en particulier d'un microscope à forces atomiques, avec un microscope optique, étant donné que le microscope à sonde à balayage comprend un montage de mesure (100) avec un équipement de décalage latéral (1) pour le décalage d'une sonde de mesure (5) dans un plan et un équipement de décalage vertical (4) pour le décalage de la sonde de mesure (5) dans un sens perpendiculaire au plan, **caractérisé en ce qu'**une lumière de condenseur est conduite à travers le montage de mesure (100) entre un éclairage de condenseur (9) et le support d'échantillon (11) le long d'un trajet optique de condenseur (10) afin d'éclairer l'échantillon de mesure (6) se trouvant sur le support d'échantillon (11).

18. Procédé selon la revendication 17, **caractérisé en ce qu'**une lumière originaire de l'échantillon de mesure (6) est conduite le long d'un trajet optique de condenseur (10) à travers le montage de mesure (200).

19. Utilisation d'un dispositif selon l'une quelconque des revendications 1 à 16 ou application d'un procédé selon la revendication 17 ou 18 dans un microscope à sonde à balayage autonome.
